# EUROPÄISCHE PATENTSCHRIFT

(11) **EP 0 592 815 B1**
(45) Veröffentlichungstag und Bekanntmachung des Hinweises auf die Patenterteilung: **17.01.1996**
(21) Anmeldenummer: 93114559.3
(22) Anmeldetag: 10.09.1993
(51) Int. Cl.: B60R 21/18, B60N 2/48

(54) **Kopfschutzvorrichtung für Insassen von Fahrzeugen**
Headrest for passengers of vehicles
Appui-tête pour les passagers de véhicules

(30) Priorität: 10.10.1992 DE 4234228
(43) Veröffentlichungstag der Anmeldung: 20.04.1994
(73) Patentinhaber: AUDI AG, D-85045 Ingolstadt (DE)
(72) Erfinder: Pankalla, Horst, D-85114 Tauberfeld (DE)
(74) Vertreter: Engelhardt, Harald

(56) Entgegenhaltungen:
- DE-A- 1 555 142
- DE-A- 2 058 608
- DE-A- 2 116 094
- DE-A- 3 032 444
- DE-A- 3 741 637
- DE-A- 4 116 162
- FR-A- 2 225 012
- FR-A- 2 648 095

## Beschreibung

Die Erfindung betrifft eine Kopfschutzvorrichtung für Insassen von Fahrzeugen, insbesondere von Personenkraftwagen, nach dem Oberbegriff des Anspruchs 1.

Als Sicherheitsvorrichtungen sind in Kraftfahrzeugen allgemein Sicherheits-Gaskissen bekannt, die bei einer Kollision automatisch über pyrotechnische Gasgeneratoren in einem Aufschlagbereich eines Fahrzeuginsassen aufgeblasen werden. Die Ansteuerung der Gasgeneratoren erfolgt dabei üblicherweise durch Beschleunigungssensoren, die eine starke Verzögerung des Fahrzeugs bei einem Aufprall oder das Eindringen eines kollidierenden Teils in den Fahrgastraum erkennen.

Serienmäßig werden derzeit bereits Sicherheits-Gaskissen im Frontaufschlagbereich eines Fahrers oder auch Beifahrers als Frontaufprallschutz eingebaut. Für die Auslösung, Ansteuerung und Füllung dieser Frontsicherheits-Gaskissen steht bei einem Frontaufprall soviel Zeit zur Verfügung (ca. 50 mS), daß diese Vorgänge mit den derzeit zur Verfügung stehenden Mitteln und Bauteilen in bewährter Weise durchführbar sind.

Bei einem Seitenaufprall sind die Verhältnisse und Zeiten wesentlich kritischer, da zwischen einer Fahrzeugseite und einem Fahrzeuginsassen nur eine geringe Verzögerungswegstrecke zur Verfügung steht und die Eindringzeiten entsprechend kurz sind. Für an sich bekannte Seiten-Sicherheits-Gaskissenanordnungen (DE 40 18 470 A1) stehen daher nur sehr kurze Zeiten (ca. 10 mS) für die Erfassung eines Gefahrenfalls, die Ansteuerung und die Füllung zur Verfügung. Mit derzeit bekannten, wirtschaftlich vertretbaren Mitteln und Maßnahmen sind ausreichend große Seiten-Sicherheits-Gaskissen innerhalb der durch die Fahrzeuggeometrie vorgegebenen kurzen Zeiten nur unbefriedigend realisierbar. Zudem kann ein Verletzungsrisiko für einen Insassen durch das schnelle und explosionsartige Aufblasen eines Seiten-Sicherheits-Gaskissens in unmittelbarer Seitennähe eines Insassen gegeben sein, wenn dieses beispielsweise einen auf der Fensterbrüstung abgestützten Arm trifft.

Bei einem Seitenaufprall zerbricht häufig die Fahrzeugseitenscheibe, wodurch ein aufgeblasenes Seiten-Sicherheits-Gaskissen im oberen Bereich, wo sich die Schulterpartie und der Kopf abstützen soll, keine Anlage und Abstützfläche zur Außenseite hin mehr hat. Für einen solchen Fall kann die Sicherheitsfunktion eines Seiten-Sicherheits-Gaskissens stark reduziert sein. Insbesondere kann dann der Kopf zur Seite hin ruckartig abknicken, wodurch trotz eines Seiten-Sicherheits-Gaskissens ein Verletzungsrisiko (Schleudertrauma) verbleibt.

Es sind weiter Prallkissen bekannt (DE 30 32 444 A1), die einen Sicherheitsgurt in Gestalt einer Manschette umschließen und auf dem Gurt verschieblich oder lösbar verbunden gehalten sind. Diese Prallkissen sollen jedoch ständig während des Fahrzeugbetriebs aufgeblasen sein und stellen wegen der ersichtlichen Bewegungs- und Sichtbehinderung keine praktikable Lösung dar. Weiter ist ein aufblasbarer Sicherheitsgurt bekannt (FR-OS 22 25 012).

Die DE-A-37 41 637 zeigt einen Airbag, der im oberen seitlichen Bereich eines Fahrzeugsitzes untergebracht ist und der im aufgeblasenen Zustand den Schulter-/Kopfbereich vor Seitenstößen schützt.

Zudem sind dem Kopfbereich eines Insassen zugeordnete Sicherheits-Gaskissen bekannt (DE-PS 15 55 142; DE-OS 20 58 608), die im Gefahrenfall großvolumig vor, hinter und seitlich zu dem Kopfbereich oder den Kopfbereich einschließend aufgeblasen werden. Für eine gute Schutzfunktion sind auch hier große Volumina erforderlich, so daß sich die im Zusammenhang mit dem Seiten-Sicherheits-Gaskissen vorstehend erläuterten Probleme und Nachteile auch hier ergeben. Die Sicherheits-Gaskissen benötigen in den dargestellten Anordnungen feste Verankerungen und Abstützungen an der Fahrzeugkarosserie, um die Aufprallenergie aufnehmen und über die Fahrzeugkarosserie abstützen zu können. Solche festen Verankerungen und Abstützungen sind aufgrund der vorgegebenen Verhältnisse am Fahrzeug im Kopfbereich nur schwierig durchzuführen und können, wie im Fall eines zerbrochenen Seitenfensters, beim Aufprallvorgang zerstört werden, wodurch die Sicherheitsfunktion reduziert sein kann.

Aufgabe der Erfindung ist es demgegenüber, eine gattungsgemäße Kopfschutzvorrichtung für Insassen von Fahrzeugen so weiterzubilden, daß deren Funktion mit einfachen Mitteln und Maßnahmen verbessert wird.

Diese Aufgabe wird mit den kennzeichnenden Merkmalen des Anspruchs 1 gelöst.

Das Sicherheits-Gaskissen ist im aufgeblasenen Zustand im Querschnitt in einer Fahrzeugquerrichtung gesehen im Kopfbereich eines Insassen V-förmig ausgebildet, mit einer etwa horizontal verlaufenden Schulterabstützfläche und einer dazu in einem V-Winkel von bevorzugt ca. 40° bis 60° schräg verlaufenden Kopfabstützfläche. In der aufgeblasenen Funktionslage liegt die zusammenlaufende V-Form bzw. die Verbindung zwischen Schulterabstützfläche und Kopfabstützfläche im Halsbereich eines Insassen, so daß bei einer Seitenbewegung des Kopfes das aufgeblasene Sicherheits-Gaskissen zur seitlichen Kopfabstützung zwischen Kopf und Schulter einklemmbar ist.

Vorteilhaft benötigt bei dieser geometrischen Form und Lage das Sicherheits-Gaskissen keine fahrzeugseitige Abstützfläche, um den Kopf gegen empfindliche, ruckartige Seitenbewegungen zu schützen, da dieser über die V-Form des Sicherheits-Gaskissens auf der Schulter des Insassen abgestützt wird. Anstelle einer festen, fahrzeugseitigen Abstützung ist somit lediglich eine Halte- und Positioniereinrichtung erforderlich, die das Sicherheits-Gaskissen beim Aufblasvorgang in die angegebene Relativlage zum Insassen bringt.

Auch für den Fall, daß bei einem Seitenaufprall eine Seitenscheibe zerbricht und sich das Sicherheits-Gaskissen somit dort nicht abstützen kann, ist durch das Einklemmen zwischen Kopf und Schulter noch eine erhebliche Sicherheitsfunktion gewährleistet.

Die Abmessungen des erfindungsgemäßen Sicherheits-Gaskissens können im Vergleich zu den Gaskissen aus dem Stand der Technik relativ klein gehalten werden, so daß auch in den zur Verfügung stehenden, sehr kleinen Zeiten, mit praktisch realisierbaren Mitteln der Aufblasvorgang durchführbar ist.

Nach Anspruch 2 ist die V-Form durch eine Seitenfläche zu einer - im Querschnitt gesehen - Dreiecksform geschlossen. Dies führt zu einer vorteilhaft kleinvolumigen Form, bei der sich die Seitenfläche ggfs. noch an einer Fahrzeuginnenwand abstützen kann.

Zur Anpassung an die menschlichen Schulter- und Kopfformen wird mit Anspruch 3 vorgeschlagen, die Kopfabstützfläche und die Schulterabstützfläche konkav zu wölben. Die Seitenfläche wird zweckmäßig als mögliche Anlagefläche konvex gewölbt.

Nach Anspruch 4 soll das Sicherheits-Gaskissen eine längliche Form etwa gleichen, V-förmigen bzw. dreiecksförmigen Querschnitts aufweisen. Damit wird eine sichere Funktion des Sicherheits-Gaskissens auch bei unterschiedlichen Längspositionen eines Insassen gewährleistet.

Das Sicherheits-Gaskissen kann nach Anspruch 5 in seiner nicht aufgeblasenen Bereitschaftsstellung in einem oberen Rückenlehnenbereich und/oder einer Kopfstütze links und/oder rechts am Fahrzeugsitz angebracht sein. Bei einer Anordnung direkt an der Rückenlehne oder an der Kopfstütze haben Sitzverstellungen keinen Einfluß auf die Relativlage zwischen Sicherheits-Gaskissen und zu schützender Person.

In einer bevorzugten Ausführungsform nach Anspruch 6 wird über eine Halte- und Positioniereinrichtung für das Sicherheits-Gaskissen aus einem oberen Umlenkbeschlag eines Sicherheitsgurts und dem Gurtband immer eine individuell angepaßte, richtige Funktionslage erhalten. Dazu wird das Sicherheits-Gaskissen, insbesondere ein längliches Sicherheits-Gaskissen, einseitig mit einem Längsende am oberen Umlenkbeschlag des Sicherheitsgurts fest verbunden und gehalten. An der Schulterabstützfläche des Sicherheits-Gaskissens ist wenigstens eine Lasche angebracht, durch die das Gurtband beweglich geführt ist. Beim Anlegen des Sicherheitsgurts wird daher das (unaufgeblasene) Sicherheits-Gaskissen über die Schulter automatisch in die gewünschte Funktionslage geführt, wobei diese selbsttätig an die individuellen Gegebenheiten, insbesondere die Körpergröße eines Insassen, angepaßt ist.

Nach Anspruch 7 bildet der Gasgenerator mit dem Sicherheits-Gaskissen eine bauliche Einheit, wobei die Gaszuführung sehr schnell auf kurzem Weg erfolgen kann.

Bei üblichen Personenkraftwagen ist der obere Umlenkbeschlag für den Sicherheitsgurt an der Innenwand des Fahrzeugs, für einen Vordersitz am B-Pfosten, angeordnet. Bei einer Längsverstellung des Fahrzeugsitzes ändert sich somit der Abstand zwischen dem oberen Umlenkbeschlag und damit dem Haltepunkt des Sicherheits-Gaskissens und einem Fahrzeuginsassen. Die Länge des Sicherheits-Gaskissens ist bei einer solchen Anordnung so zu dimensionieren, daß bei allen gegebenen Verstellwegen eine geeignete Funktionslage im Kopfbereich eines Insassen möglich ist. In einer weiter bekannten Ausführung von Fahrzeugsitzen ist es auch bekannt, die Sicherheitsgurte direkt den Fahrzeugsitzen zugeordnet anzubringen, wobei der obere Umlenkbeschlag dann im oberen Bereich der Rücksitzlehne liegt. Sitzverstellungen haben dann keinen Einfluß auf die Relativlage des Sicherheits-Gaskissens zu einem Insassen, wodurch die Länge des Sicherheits-Gaskissens kurz und kompakt gehalten werden kann.

In einer bevorzugten Anordnung nach Anspruch 9 wird das Sicherheits-Gaskissen jeweils zur Fahrzeugaußenseite hin angebracht, da das erfindungsgemäße Sicherheits-Gaskissen besonders als Sicherheitselement zur Fahrzeugaußenseite hin geeignet ist. Da jedoch bei einem Seitenaufprall (beispielsweise an einer gegenüberliegenden Fahrzeugaußenseite) ruckartige Bewegungen des Kopfs zur Fahrzeuglängsmitte hin ausgelöst werden, kann ein erfindungsgemäßes Sicherheits-Gaskissen, insbesondere auch zusätzlich zur Fahrzeugmitte hin, vorteilhaft angeordnet sein.

Anhand einer Zeichnung wird ein Ausführungsbeispiel der Erfindung mit weiteren Einzelheiten, Merkmalen und Vorteilen näher erläutert.

Es zeigen
- Fig. 1: eine Frontansicht auf den Fahrer eines Personenkraftwagens mit angelegtem Sicherheitsgurt und einem daran gehaltenen Sicherheits-Gaskissen in unaufgeblasener Bereitschaftsstellung und
- Fig. 2: eine schematische Darstellung entsprechend Fig. 1 mit einem aufgeblasenen Sicherheits-Gaskissen in Funktionsstellung.

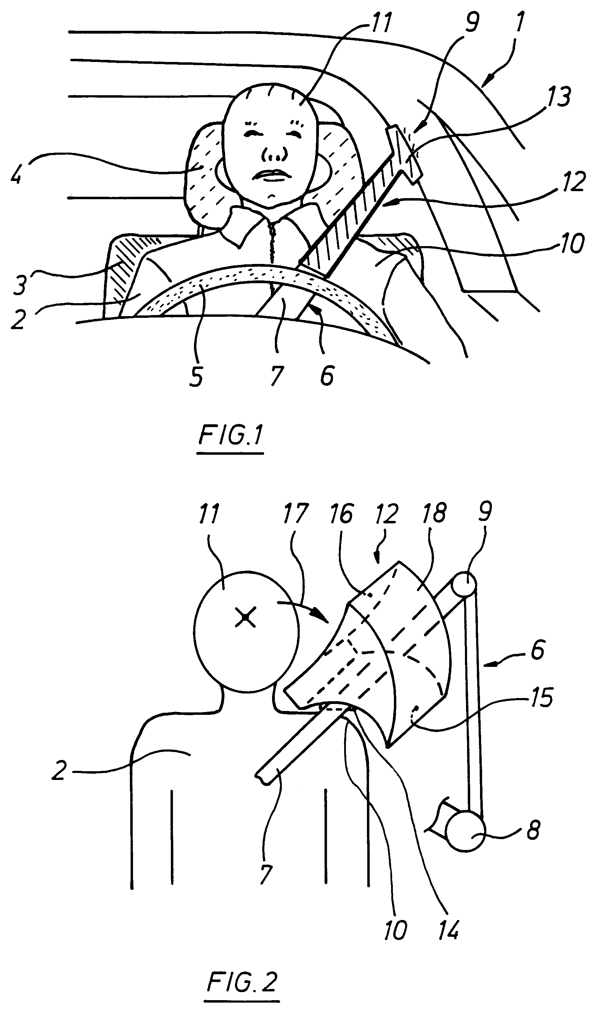

In Fig. 1 ist ein Teilausschnitt eines Personenkraftwagens 1 in einer Frontansicht durch die Frontscheibe auf einen Fahrer 2 dargestellt. Der Fahrer 2 sitzt auf einem Fahrersitz 3 mit Kopfstütze 4 hinter einem Lenkrad 5.

Der Fahrer 2 ist mit einem Sicherheitsgurt 6 angeschnallt. Das Gurtband 7 verläuft dabei (sh. auch Fig. 2) von einem Gurtaufroller 8 zu einem oberen Umlenkbeschlag 9. Dieser Umlenkbeschlag 9 ist im oberen Bereich des B-Pfostens etwa in Kopfhöhe des Fahrers 2 angebracht. Von dort verläuft das Gurtband 7 von hinten und oben schräg über die Schulter 10 neben dem Kopf 11 quer über die Brust des Fahrers.

Weiter ist eine Kopfschutzvorrichtung als automatisch aufblasbares Sicherheits-Gaskissen 12 vorgesehen. In Fig. 1 ist dieses in seiner nicht aufgeblasenen Bereitschaftsstellung und in Fig. 2 (in schematischer Darstellung) in der aufgeblasenen Funktionsstellung gezeigt. Das Sicherheits-Gaskissen ist länglich ausgeführt und einseitig mit einem Längsende 13 im Bereich des oberen Umlenkbeschlags 9 mit dem Fahrzeug fest verbunden. Dort ist auch ein Gasgenerator enthalten, der über einen Beschleunigungssensor zum Aufblasen des Sicherheits-Gaskissens 12 ansteuerbar ist (die Verbindung des Längsendes 13 am Umlenkbeschlag 9 ist in Fig. 2 der Übersichtlichkeit halber nicht dargestellt). In der Bereitschaftsstellung hat das Sicherheits-Gaskissen 12 eine flache, längliche Form entsprechend dem Gurtband 7. Dieses ist unter dem Sicherheits-Gaskissen in Laschen 14 oder Durchgängen beweglich geführt. Die feste Halterung am Längsende 13 in Verbindung mit den Laschen 14 und der Lage des Gurtbandes 17 bilden eine Halte- und Positioniereinrichtung für das Sicherheits-Gaskissen 12, wodurch dieses im Schulterbereich 10 neben dem Kopf 11 in Bereitschaftsstellung liegt.

In Fig. 2 ist die aufgeblasene Funktionsstellung gezeigt. Das Sicherheits-Gaskissen 12 ist im Querschnitt V-förmig ausgebildet mit einer Schulterabstützfläche 15 und einer Kopfabstützfläche 16, wobei die Verbindung zwischen diesen beiden Flächen im Halsbereich des Fahrers 2 liegt, so daß bei einer Seitenbewegung des Kopfs (Pfeil 17) das Sicherheits-Gaskissen 12 zur seitlichen Kopfabstützung zwischen Kopf 11 und Schulter 10 eingeklemmt wird. Zum Ausgleich und zur Anpassung an Bewegungen des Fahrers 2 in Fahrzeuglängsrichtung ist das Sicherheits-Gaskissen 12 länglich mit etwa gleichem Querschnitt ausgeführt. Für eine verbesserte Abstützfunktion und zur Anpassung an die körperlichen Gegebenheiten sind sowohl die Schulterabstützfläche 15 als auch die Kopfabstützfläche 16 konkav gewölbt.

Die V-Form des Sicherheits-Gaskissens 12 ist durch eine konvex gewölbte Seitenfläche 18 zu einer - im Querschnitt gesehen - Dreiecksform geschlossen.

Die dargestellte Anordnung hat folgende Funktion: Durch das Anlegen des Sicherheitsgurts 6 wird das Sicherheits-Gaskissen 12 selbsttätig in die richtige Position zwischen Schulter 10 und Kopf 11 in Bereitschaftsstellung gebracht. Durch die längliche, flache Form erfolgt keine zusätzliche Einschränkung oder Behinderung des Fahrers 2. Wenn über einen Beschleunigungssensor oder andere an sich bekannte Maßnahmen ein Seitenaufprall festgestellt wird, erfolgt über eine Steuereinrichtung die Zündung einer pyrotechnischen Ladung als Gasgenerator, wodurch das relativ geringe Volumen des Sicherheits-Gaskissens 12 in sehr kurzer Zeit zu der in Fig. 2 dargestellten Dreiecksform aufgeblasen wird. Eine seitliche Kopfbewegung (Pfeil 17) wird dadurch abgefangen, daß sich das Sicherheits-Gaskissen zwischen Schulter 10 und Kopf 11 einklemmt und damit der Kopf 11 über die Schulter 10 abgestützt ist. Diese Abstützung wirkt in jedem Fall unabhängig davon, ob zur Fahrzeugaußenseite hin eine weitere Abstützmöglichkeit, z.B. an einem Seitenfenster, über die Seitenfläche 18 vorliegt.

Die in den Fig. 1 und 2 dargestellte Anordnung betrifft den Fahrerbereich. Die gleiche Anordnung kann auch für die anderen Insassenplätze vorgesehen werden. Dreieckförmige Sicherheits-Gaskissen 12 können auch jeweils an der anderen, zur Fahrzeugmitte hin liegenden Seite des Kopfs 11 vorgesehen sein. Dazu wäre eine Anordnung jeweils im Fahrzeugsitz 3 oder der Kopfstütze 4 vorzusehen.

## Patentansprüche

1. Kopfschutzvorrichtung für Insassen von Fahrzeugen, insbesondere von Personenkraftwagen,
mit wenigstens einem bei Gefahr mit einem Gasgenerator automatisch in eine Funktionslage im Bereich einer seitlichen Verlängerung einer Fahrzeugsitzlehne bzw. im seitlichen Kopfbereich eines Insassen aufblasbaren Sicherheits-Gaskissen, wobei die Funktionslage durch eine Halte- und Positioniereinrichtung festgelegt ist,
dadurch gekennzeichnet,
daß das Sicherheits-Gaskissen (12) im aufgeblasenen Zustand im Querschnitt in einer Fahrzeugquerrichtung im Kopfbereich eines Insassen (2) V-förmig ausgebildet ist, mit einer Schulterabstützfläche (15) und einer dazu in einem V-Winkel schräg verlaufenden Kopfabstützfläche (16),
daß in der aufgeblasenen Funktionslage (Fig. 2) die zusammenlaufende V-Form bzw. die Verbindung zwischen Schulterabstützfläche (15) und Kopfabstützfläche (16) im Halsbereich eines Insassen (2) liegt, so daß bei einer Seitenbewegung des Kopfs (Pfeil 17) das aufgeblasene Sicherheits-Gaskissen (12) zur seitlichen Kopfabstützung zwischen Kopf (11) und Schulter (10) einklemmbar ist.

2. Kopfschutzvorrichtung nach Anspruch 1, dadurch gekennzeichnet, daß die V-Form durch eine Seitenfläche (18) zu einer - im Querschnitt gesehenen - Dreiecksform geschlossen ist.

3. Kopfschutzvorrichtung nach Anspruch 1 oder 2, dadurch gekennzeichnet, daß die Kopfabstützfläche (16) und die Schulterabstützfläche (15) konkav gewölbt und/oder die Seitenfläche (18) konvex gewölbt sind.

4. Kopfschutzvorrichtung nach einem der Ansprüche 1 bis 3, dadurch gekennzeichnet, daß das Sicherheits-Gaskissen (12) eine längliche Form etwa gleichen Querschnitts aufweist.

5. Kopfschutzvorrichtung nach einem der Ansprüche 1 bis 4, dadurch gekennzeichnet, daß das Sicherheits-Gaskissen (12) in seiner Bereitschaftsstellung in einem oberen Rückenlehnenteil und/oder einer Kopfstütze (4) links und/oder rechts am Fahrzeugsitz (3) angebracht ist.

6. Kopfschutzvorrichtung nach einem der Ansprüche 1 bis 4, dadurch gekennzeichnet, daß die Halte- und Positioniereinrichtung für das Sicherheits-Gaskissen (12) aus einem oberen Umlenkbeschlag (9) eines Sicherheitsgurtes (6) und dem Gurtband (7) gebildet ist, wobei
das Sicherheits-Gaskissen (12) einseitig mit einem Längsende (13) am oberen Umlenkbeschlag (9) fest verbunden und gehalten ist und
an der Schulterabstützfläche (15) wenigstens eine Lasche (14) angebracht ist, durch die das Gurtband (7) beweglich geführt ist, so daß beim Anlegen des Sicherheitsgurts (6) das Sicherheits-Gaskissen (12) (unaufgeblasen) in eine geeignete Bereitschaftslage, abgestimmt auf die individuellen Gegebenheiten eines Insassen (2), positionierbar ist.

7. Kopfschutzvorrichtung nach Anspruch 6, dadurch gekennzeichnet, daß der Gasgenerator mit dem Sicherheits-Gaskissen (12) eine bauliche Einheit bildet und damit ebenfalls am oberen Umlenkbeschlag (9) bzw. dem Sicherheitsgurt (6) verbunden ist.

8. Kopfschutzvorrichtung nach Anspruch 6 oder 7, dadurch gekennzeichnet, daß der obere Umlenkbeschlag (9) am Fahrzeugsitz (3) oder an einer Innenwand des Fahrzeugs, insbesondere dem B-Pfosten, angeordnet ist.

9. Kopfschutzvorrichtung nach einem der Ansprüche 1 bis 8, dadurch gekennzeichnet, daß das Sicherheits-Gaskissen (12) vom Insassen zu einer Fahrzeugseite hin angebracht ist.

## Claims

1. Head protection mechanism for occupants of vehicles, in particular of passenger cars,
having at least one safety gas cushion adapted to be automatically inflated in the event of danger by a gas generator into an operational position in the vicinity of a lateral extension of a vehicle seat back or in the lateral head region of an occupant, the operational position being fixed by a holding and positioning device,
characterised in that
in the inflated state the safety gas cushion (12) is V-shaped in cross-section in a direction transverse to the vehicle in the head region of an occupant (2), with a shoulder supporting surface (15) and a head supporting surface (16) extending obliquely thereto at a V-angle,
in the inflated operational position (Fig. 2) the converging V-shape, or connection between the shoulder supporting surface (15) and the head supporting surface (16), is situated in the neck region of an occupant (2), with the result that if the head is moved sideways (arrow 17) the inflated safety gas cushion (12) can be wedged between the head (11) and shoulder (10) so as to support the head from the side.

2. Head protection mechanism according to claim 1, characterised in that the V-shape is closed by a lateral face (18) to form a triangle when viewed in cross-section.

3. Head protection mechanism according to claim 1 or 2, characterised in that the head supporting surface (16) and the shoulder supporting surface (15) are concavely curved and/or the lateral face (18) is convexly curved.

4. Head protection mechanism according to any of claims 1 to 3, characterised in that the safety gas cushion (12) has an elongate form of more or less identical cross-section.

5. Head protection mechanism according to any of claims 1 to 4, characterised in that in its standby position the safety gas cushion (12) is mounted in an upper portion of the seat back and/or a head restraint (4) on the left and/or right of the vehicle seat (3).

6. Head protection mechanism according to any of claims 1 to 4, characterised in that the holding and positioning device for the safety gas cushion (12) is constituted by an upper diverter fixture (9) forming part of a safety belt (6) and by the belt strap (7),
the safety gas cushion (12) being fixedly joined and retained on one side by one longitudinal extremity (13) to the upper diverter fixture (9) and
there being mounted on the shoulder supporting surface (15) at least one shackle (14) through which the belt strap (7) passes in movable manner, with the result that when the safety belt (6) is attached the safety gas cushion (12) (uninflated) can be positioned in a suitable standby position, customised to suit the individual requirements of an occupant (2).

7. Head protection mechanism according to claim 6, characterised in that the gas generator forms a constructional unit with the safety gas cushion (12) and thus is likewise joined to the upper diverter fixture (9), or rather to the safety belt (6).

8. Head protection mechanism according to claim 6 or 7, characterised in that the upper diverter fixture (9) is arranged on the vehicle seat (3) or on an inner wall of the vehicle, in particular the B-pillar.

9. Head protection mechanism according to any of claims 1 to 8, characterised in that the safety gas cushion (12) is mounted towards one side of the vehicle by the occupant.

## Revendications

1. Dispositif de protection de la tête pour des passagers de véhicules, notamment de voitures particulières,
comportant au moins un coussin pneumatique de sécurité qui, en cas de danger, peut être gonflé automatiquement à l'aide d'un générateur de gaz, dans une position fonctionnelle située dans la région d'un prolongement latéral du dossier d'un siège du véhicule ou dans la région latérale de la tête d'un passager, la position fonctionnelle étant déterminée par un dispositif de support et de positionnement,
caractérisé en ce que
le coussin pneumatique de sécurité (12) présente, dans l'état gonflé, la forme d'un V, en coupe transversale dans une direction transversale du véhicule, dans la région de la tête d'un passager (2), avec une surface de soutien d'épaule (15) et une surface de soutien de tête (16) qui s'étend obliquement par rapport à cette dernière en formant un angle aigu avec elle,
en ce que, dans la position fonctionnelle obtenue par gonflage (Fig. 2), la forme convergente en V, ou la jonction entre la surface de soutien d'épaule (15) et la surface de soutien de tête (16) se trouvent dans la région du cou d'un passager (2), pour que, lors d'un mouvement latéral de la tête (flèche 17), le coussin pneumatique de sécurité gonflé (12) puisse venir se coincer, en vue du soutien latéral de la tête, entre la tête (11) et l'épaule (10).

2. Dispositif de protection de la tête selon la revendication 1, caractérisé en ce que la forme en V est fermée par une surface latérale (18) sous la forme, vue en coupe transversale, d'un triangle.

3. Dispositif de protection de la tête selon la revendication 1 ou 2, caractérisé en ce que la surface de soutien de tête (16) et la surface de soutien d'épaule (15) sont cintrées sous une forme concave et/ou la surface latérale (18) est cintrée sous une forme convexe.

4. Dispositif de protection de la tête selon l'une des revendications 1 à 3, caractérisé en ce que le coussin pneumatique de sécurité (12) présente une forme allongée de section transversale sensiblement uniforme.

5. Dispositif de protection de la tête selon l'une des revendications 1 à 4, caractérisé en ce que le coussin pneumatique de sécurité (12) est, dans sa position d'attente, installé dans une partie supérieure du dossier et/ou un appui-tête (4), à gauche et/ou à droite, sur un siège (3) du véhicule.

6. Dispositif de protection de la tête selon l'une des revendications 1 à 4, caractérisé en ce que le dispositif de support et de positionnement pour le coussin pneumatique de sécurité (12) est formé d'une ferrure supérieure de renvoi (9) d'une ceinture de sécurité (6) et de la sangle (7) de la ceinture,
le coussin pneumatique de sécurité (12) étant, d'un côté, par une extrémité longitudinale (13), fermement relié à la ferrure supérieure de renvoi (9) et retenu sur cette dernière, et
sur la surface de soutien d'épaule (15), est fixé au moins un passant (14), à travers lequel la sangle (7) de la ceinture est guidée dans son mouvement, pour que, lorsque la ceinture de sécurité (6) est attachée, le coussin pneumatique de sécurité (12) (dégonflé) puisse être placé dans une position d'attente appropriée, adaptée aux caractéristiques individuelles d'un passager (2).

7. Dispositif de protection de la tête selon la revendication 6, caractérisé en ce que le générateur de gaz forme une unité structurelle avec le coussin pneumatique de sécurité (12) et est donc, lui aussi, relié à la ferrure supérieure de renvoi (9) et, respectivement, à la ceinture de sécurité (6).

8. Dispositif de protection de la tête selon la revendication 6 ou 7, caractérisé en ce que la ferrure supérieure de renvoi (9) est disposée sur le siège (3) du véhicule ou sur une paroi intérieure du véhicule, en particulier sur le montant B.

9. Dispositif de protection de la tête selon l'une des revendications 1 à 8, caractérisé en ce que le coussin pneumatique de sécurité (12) est installé dans une région allant du passager à un côté du véhicule.
